# EUROPÄISCHE PATENTANMELDUNG

(11) **EP 2 186 670 A1**
(43) Veröffentlichungstag der Anmeldung: **19.05.2010**
(21) Anmeldenummer: 09175120.6
(22) Anmeldetag: 05.11.2009
(51) Int. Cl.: B60K 17/02, F16D 13/52, F16D 25/0638, F16D 43/284, B60W 20/00, B60W 10/02, B60K 6/387, B60K 6/48

(54) **Antriebsstrang**

(30) Priorität: 14.11.2008 DE 102008043749
(71) Anmelder: ZF Friedrichshafen AG, 88038 Friedrichshafen (DE)
(72) Erfinder: Weber, Michael, 88289, Waldburg (DE); Fritz, Walter, 88085, Langenargen (DE)

(57) **Zusammenfassung**

Die Erfindung betrifft einen Antriebsstrang eines Kraftfahrzeugs, wobei der Antriebsstrang zumindest einen Hybridantrieb mit einem Verbrennungsmotor und einer Elektromaschine, eine zwischen den Verbrennungsmotor und die Elektromaschine geschaltete Kupplung (5), ein zwischen dem Hybridantrieb und einem Abtrieb angeordnetes Getriebe, sowie ein Anfahrelement umfasst, wobei dem Getriebe eine Haupthydraulikpumpe, die unter anderem zum Schließen der zwischen den Verbrennungsmotor und die Elektromaschine geschalteten Kupplung (5) vorgesehen ist. Erfindungsgemäß, sind der Kolbenraum (13) und der Druckausgleichsraum (14) der Kupplung (5) derart dimensioniert, dass bei ausgefallener Elektromaschine des Hybridantriebs und bei geöffneter sowie elektrisch angesteuerter Kupplung (5) ab einer definierten Grenzdrehzahl des Verbrennungsmotors des Hybridantriebs im Kolbenraum (13) ein Rotationshydraulikdruck herrscht, der die zwischen den Verbrennungsmotor und die Elektromaschine geschaltete Kupplung (5) zumindest soweit schließt, dass dieselbe ein Drehmoment überträgt, welches so groß ist, dass die Haupthydraulikpumpe einen zum weiteren Schließen der Kupplung (5) erforderlichen Hydraulikdruck im Kolbenraum (13) bereitstellt.

## Beschreibung

Die Erfindung betrifft einen zumindest ein Getriebe und einen Hybridantrieb umfassenden Antriebsstrang eines Kraftfahrzeugs nach dem Oberbegriff des Anspruchs 1.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft einen Antriebsstrang, der zumindest ein Getriebe und als Antriebsaggregat einen Hybridantrieb mit einem Verbrennungsmotor und einer als Elektromotor und/oder Generator betreibbaren Elektromaschine umfasst.

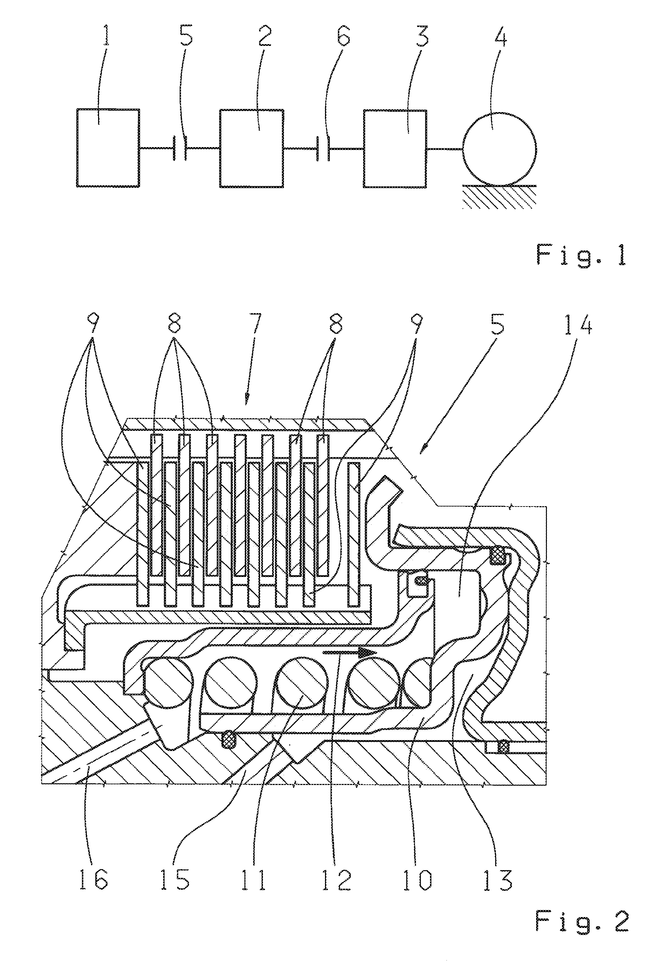

Fig. 1 zeigt ein aus der Praxis bekanntes Antriebsstrangschema für einen Antriebsstrang mit einem Hybridantrieb, der einen Verbrennungsmotor 1 und eine Elektromaschine 2 umfasst. Ein Getriebe 3 setzt das Zugkraftangebot des Hybridantriebs um und stellt dasselbe an einem Abtrieb 4 bereit. In Fig. 1 ist zwischen den Verbrennungsmotor 1 und die Elektromaschine 2 eine Kupplung 5 geschaltet. Weiterhin ist gemäß Fig. 1 zwischen die Elektromaschine 2 und das Getriebe 3 ein getriebeexternes Anfahrelement 6 geschaltet. Anstelle eines getriebeexternen Anfahrelements 6 kann auch ein getriebeinternes Anfahrelement vorhanden sein. Die in Fig. 1 dargestellte Struktur eines Antriebsstrangs mit einem Hybridantrieb wird auch als Parallelhybrid-Antriebsstrang bezeichnet.

Bei einer rein elektromotorischen Fahrt des in Fig. 1 dargestellten Antriebsstrangs ist die Kupplung 5 zwischen dem Verbrennungsmotor 1 und der Elektromaschine 2 geöffnet, wobei der Verbrennungsmotor 1 dann vorzugsweise ausgeschaltet ist und still steht. Soll ausgehend von einer solchen rein elektromotorischen Fahrt der Verbrennungsmotor 1 gestartet und der Antriebsstrang von einer rein elektromotorischen Fahrt in eine Hybridfahrt überführt werden, so muss die Kupplung 5 geschlossen werden.

Zum Schließen der zwischen den Verbrennungsmotor 1 und die Elektromaschine 2 geschalteten Kupplung 5 ist ein Hydraulikdruck erforderlich, der typischerweise von einer dem Getriebe 3 zugeordneten, nicht gezeigten Haupthydraulikpumpe bereitgestellt wird. Die dem Getriebe 3 zugeordnete Haupthydraulikpumpe ist vorzugsweise in das Getriebe 3 integriert. Die dem Getriebe 3 zugeordnete Haupthydraulikpumpe wird bei geöffneter Kupplung 5 ausschließlich von der Elektromaschine 2 des Hybridantriebs angetrieben.

Bei aus der Praxis bekannten Antriebssträngen wird vorgeschlagen, zusätzlich zur Haupthydraulikpumpe eine Zusatzhydraulikpumpe vorzusehen, um die Haupthydraulikpumpe in ihrer Funktion zu unterstützen. Derartige Zusatzhydraulikpumpen sind jedoch teuer, so dass es wünschenswert ist, dass ein Antriebsstrang ohne Zusatzhydraulikpumpe auskommt. Fällt jedoch die Elektromaschine 2 des Hybridantriebs aus, so kann dann, wenn keine Zusatzhydraulikpumpe vorhanden ist, bei aus der Praxis bekannten Antriebssträngen die zwischen den Verbrennungsmotor 1 und die Elektromaschine 2 des Hybridantriebs geschaltete Kupplung 5 nicht mehr geschlossen werden. Daher kann bei aus der Praxis bekannten Antriebssträngen bislang auf Zusatzhydraulikpumpen nicht verzichtet werden.

Hiervon ausgehend liegt der vorliegenden Erfindung das Problem zu Grunde, einen neuartigen Antriebsstrang zu schaffen, der ohne Zusatzhydraulikpumpe auskommt. Dieses Problem wird durch einen Antriebsstrang gemäß Anspruch 1 gelöst. Erfindungsgemäß sind ein Kolbenraum und ein Druckausgleichsraum der Kupplung derart dimensioniert, dass bei ausgefallener Elektromaschine des Hybridantriebs und bei geöffneter sowie elektrisch angesteuerter Kupplung ab einer definierten Grenzdrehzahl des Verbrennungsmotors im Kolbenraum ein Rotationshydraulikdruck herrscht, der die zwischen den Verbrennungsmotor und die Elektromaschine geschaltete Kupplung zumindest soweit schließt, dass dieselbe ein Drehmoment überträgt, welches so groß ist, dass die Haupthydraulikpumpe einen zum weiteren Schließen der Kupplung erforderlichen Hydraulikdruck im Kolbenraum bereitstellt.

Beim erfindungsgemäßen Antriebsstrang werden der Kolbenraum und der Druckausgleichsraum der zwischen den Verbrennungsmotor und die Elektromaschine des Hybridantriebs geschalteten Kupplung derart dimensioniert, dass dann, wenn die zwischen den Verbrennungsmotor und die Elektromaschine geschaltete Kupplung geöffnet ist und die Elektromaschine ausfällt, die zwischen den Verbrennungsmotor und die Elektromaschine geschaltete Kupplung in einen kraftschlüssigen Zustand überführt werden kann. Hierzu wird der an sich bei einer Kupplung unerwünschte Effekt des Schließens durch den Rotationshydraulikdruck ausgenutzt. Der Erfindung liegt demnach die Erkenntnis zugrunde, dass durch die gezielte Dimensionierung des Kolbenraums und des Druckausgleichsraum der zwischen den Verbrennungsmotor und die Elektromaschine des Hybridantriebs geschalteten Kupplung in derselben ein Rotationshydraulikdruck zum Schließen der Kupplung bei ausgefallener Elektromaschine nutzbar gemacht werden kann. Bislang sind Kupplungen so ausgelegt, dass diesem Effekt des Kupplungsschließens durch den Rotationshydraulikdruck entgegengewirkt wird. Die Erfindung macht sich jedoch gerade diesen Effekt nutzbar.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert, Dabei zeigt:
- Fig. 1: ein Antriebsstrangschema eines Kraftfahrzeugs; und
- Fig. 2: ein Detail eines erfindungsgemäßen Antriebsstrangs im Bereich der zwischen den Verbrennungsmotor und die Elektromaschine geschalteten Kupplung.

Das Grundprinzip eines Parallel-Hybridantriebsstrangs wurde bereits unter Bezugnahme auf Fig. 1 beschrieben. Die hier vorliegende Erfindung betrifft nun solche Details eines Paralielhybrid-Antriebsstrangs, nämlich solche Details der zwischen den Verbrennungsmotor 1 und die Elektromaschine 2 geschalteten Kupplung 5, mit Hilfe derer gewährleistet werden kann, dass eine geöffnete Kupplung 5 selbst bei ausgefallener Elektromaschine 2 ohne Zusatzhydraulikpumpe sicher geschlossen werden kann. Diesbezügliche Details werden nachfolgend unter Bezugnahme auf Fig. 2 beschrieben.

Fig. 2 zeigt einen schematisierten Ausschnitt aus der zwischen den Verbrennungsmotor 1 und die Elektromaschine 2 des Hybridantriebs geschalteten Kupplung 5, wobei die Kupplung 5 ein Lamellenpaket 7 aus mehreren statorseitigen Lamellen 8 und mehreren rotorseitigen Lamellen 9 umfasst. Bei geschlossene Kupplung 5 sind die rotorseitigen Lamellen 9 und die statorseitigen Lamellen 8 zusammengedrückt. Bei geöffneter Kupplung 5 hingegen sind die rotorseitigen Lamellen 9 und die statorseitigen Lamellen 8 auseinandergedrückt.

Im gezeigten Ausführungsbeispiel sind zum Schließen der Kupplung 5 die rotorseitigen Lamellen 9 relativ zu den feststehenden, statorseitigen Lamellen 8 des Lamellenpakets 7 verlagerbar und zwar mit Hilfe eines rotorseitigen Betätigungselements 10. Bei geöffneter Kupplung 5 drückt ein mit dem Betätigungselement 10 zusammenwirkendes Federelement 11 das Betätigungselement 10 in Richtung des in Fig. 2 gezeigten Pfeils 12, wobei dann die statorseitigen Lamellen 8 und die rotorseitigen Lamellen 9 des Lamellenpakets 7 auseinandergedrückt sind. Zum Schließen der Kupplung 5 wird das Betätigungselement 10 entgegen der vom Federelement 11 bereitgestellten Federkraft entgegengesetzt zur Richtung des Pfeils 12 bewegt, wobei dann das Betätigungselement 10 die statorseitigen Lamellen 8 und die rotorseitigen Lamellen 9 des Lamellenpakets 7 zum Schließen der Kupplung 5 zusammendrückt.

Zum Verlagern des Betätigungselements 10 entgegen der vom Federelement 11 bereitgestellten Federkraft und damit entgegen der Richtung des Pfeils 12 wird in einem Kolbenraum 13 der Kupplung 5, der durch das Betätigungselement 10 von einem Druckausgleichsraum 14 derselben abgegrenzt ist, ein Hydraulikdruck aufgebaut. Dieser im Kolbenraum 13 aufgebaute Hydraulikdruck wirkt der Federkraft des Federelements 11 und einem gegebenenfalls im Druckausgleichsraum 14 herrschenden Hydraulikdruck entgegen, so dass dann mit Hilfe des Betätigungselements 10 die Kupplung 5 geschlossen werden kann.

Der Kolbenraum 13 steht über eine Ölzuführleitung 15 und der Druckausgleichsraum 14 über eine Ölzuführleitung 16 mit einem Hydraulikkreislauf in Verbindung.

Im regulären Betrieb des Antriebsstrangs wird der Hydraulikdruck in dem Kolbenraum 13, mit Hilfe dessen die Kupplung 5 geschlossen werden kann, von der in das Getriebe 3 integrierten Haupthydraulikpumpe bereitgestellt, die dann von der Elektromaschine 2 des Hybridantriebs aus angetrieben wird,

Um nun auch bei ausgefallener Elektromaschine 2 und geöffneter Kupplung 5 ein sicheres Schließen der Kupplung 5 dann zu gewährleisten, wenn der Antriebsstrang keine Zusatzhydraulikpumpe umfasst, werden im Sinne der hier vorliegenden Erfindung der Kolbenraum 13 und der Druckausgleichsraum 14 der Kupplung 5 derart dimensioniert, dass bei geöffneter sowie elektrisch angesteuerter Kupplung 5 ab einer definierten Grenzdrehzahl des Verbrennungsmotors 1 im Kolbenraum 13 ein Rotationshydraulikdruck herrscht, der die zwischen dem Verbrennungsmotor 1 und die Elektromaschine 2 geschaltete Kupplung 5 zumindest so weit schließ, dass dieselbe ein Drehmoment überträgt, weiches so groß ist, dass die Haupthydraulikpumpe einen zum weiteren Schließen der Kupplung 5 erforderlichen Hydraulikdruck im Kolbenraum 13 bereitstellen kann.

Ferner sind der Kolbenraum 13 und der Druckausgleichsraum 14 der Kupplung 5 derart dimensioniert, dass bei ausgefallener Elektromaschine 2 des Hybridantriebs und geöffneter sowie elektrisch angesteuerter Kupplung 5 unterhalb der definierten Grenzdrehzahl des Verbrennungsmotors 1 im Kolbenraum ein Rotationshydraulikdruck herrscht, der nicht ausreicht, um die Kupplung 5 zu schließen.

Erst bei Überschreiten bzw. Erreichen der definierten Grenzdrehzahl des Verbrennungsmotors 2 ist demnach bei ausgefallener Elektromaschine 2 und geöffneter Kupplung 5 der im Kolbenraum 13 herrschende Rotationshydraulikdruck groß genug, um bei elektrisch angesteuerter Kupplung 5 dieselbe soweit zu schließen, dass mit Hilfe des von derselben übertragenen Moments die in das Getriebe 3 integrierte Haupthydraulikpumpe einen definierten Systemdruck erzeugen kann, um die Kupplung 5 weiter zu schließen. Hierbei muss sich das Getriebe 3 in Neutralposition befinden.

Dann, wenn bei ausgefallener Elektromaschine 2 die Kupplung 5 elektrisch nicht angesteuert ist, kann dieselben auch nicht über den Rotationshydraulikdruck geschlossen werden, und zwar weder unterhalb der definierten Grenzdrehzahl des Verbrennungsmotors 1 noch mit Erreichen bzw. Überschreiten derselben.

Nach einer vorteilhaften Weiterbildung der hier vorliegenden Erfindung kann vorgesehen sein, dass der Druckausgleichsraum 14 zur Unterstützung des Schließens der Kupplung 5 bei ausgefallener Elektromaschine 2 über mindestens ein Ventil entlüftet wird.

Ebenso kann vorgesehen sein, dass der Druckausgleichsraum 14 der Kupplung 5 zur Unterstützung des Öffnens derselben bei ausgefallener Elektromaschine 2 über mindestens ein Ventil befüllt wird.

Bedingt dadurch, dass im Sinne der hier vorliegenden Erfindung der ansonsten unerwünschte Effekt des Kupplungsschließens durch den Rotationshydraulikdruck genutzt wird, kann die zwischen den Verbrennungsmotor 1 und die Elektromaschine 2 geschaltete Kupplung 5 selbst dann bei angesteuerter Kupplung 5 geschlossen werden, wenn die Elektromaschine 2, der dem Antreiben der dem Getriebe 3 zugeordneten Haupthydraulikpumpe dient, ausgefallen ist, und wenn der Antriebsstrang keine Zusatzhydraulikpumpe aufweist.

### Bezugszeichen

- 1: Verbrennungsmotor
- 2: Elektromaschine
- 3: Getriebe
- 4: Abtrieb
- 5: Kupplung
- 6: Anfahrelement
- 7: Lamellenpaket
- 8: Lamelle
- 9: Lamelle
- 10: Betätigungselement
- 11: Federelement
- 12: Pfeil
- 13: Kolbenraum
- 14: Druckausgleichsraum
- 15: Ölzuführleitung
- 16: Ölzuführleitung

## Patentansprüche

1. Antriebsstrang eines Kraftfahrzeugs, wobei der Antriebsstrang zumindest einen Hybridantrieb mit einem Verbrennungsmotor und einer Elektromaschine, eine zwischen den Verbrennungsmotor und die Elektromaschine geschaltete Kupplung, ein zwischen dem Hybridantrieb und einem Abtrieb angeordnetes Getriebe, sowie ein getriebeinternes oder getriebeexternes Anfahrelement umfasst, wobei dem Getriebe eine Haupthydraulikpumpe zugeordnet ist, die einen Hydraulikdruck bereitstellt, der unter anderem dem Schließen der zwischen den Verbrennungsmotor und die Elektromaschine geschalteten Kupplung dient, und wobei die zwischen den Verbrennungsmotor und die Elektromaschine geschaltete Kupplung ein Lamellenpaket mit relativ zueinander verlagerbaren Lamellen und mindestens ein Federelement umfasst, wobei eine von dem oder jedem Federelement bereitgestellte Federkraft sowie ein gegebenenfalls in einem Druckausgleichsraum der Kupplung herrschender Hydraulikdruck die Lamellen der Kupplung zum Öffnen derselben auseinanderdrückt und ein in einem Kolbenraum der Kupplung herrschender, von der Haupthydraulikpumpe bereitgestellter Hydraulikdruck die Lamellen der Kupplung zum Schließen derselben bei elektrisch angesteuerter Kupplung entgegen der Federkraft des Federelements und des gegebenenfalls in dem Druckausgleichsraum der Kupplung herrschenden Hydraulikdrucks zusammendrückt, **dadurch gekennzeichnet, dass** der Kolbenraum (13) und der Druckausgleichsraum (14) der Kupplung (5) derart dimensioniert sind, dass bei ausgefallener Elektromaschine (2) des Hybridantriebs und bei geöffneter sowie elektrisch angesteuerter Kupplung (5) ab einer definierten Grenzdrehzahl des Verbrennungsmotors (1) des Hybridantriebs im Kolbenraum (13) ein Rotationshydraulikdruck herrscht, der die zwischen den Verbrennungsmotor (1) und die Elektromaschine (2) geschaltete Kupplung (5) zumindest soweit schließt, dass dieselbe ein Drehmoment überträgt, welches so groß ist, dass die Haupthydraulikpumpe einen zum weiteren Schließen der Kupplung (5) erforderlichen Hydraulikdruck im Kolbenraum (13) bereitstellt.

2. Antriebsstrang nach Anspruch 1, **dadurch gekennzeichnet, dass** der Kolbenraum (13) und der Druckausgleichsraum (14) der Kupplung (5) derart dimensioniert sind, dass bei ausgefallener Elektromaschine (2) des Hybridantriebs und bei geöffneter sowie elektrisch angesteuerter Kupplung (5) unterhalb der definierten Grenzdrehzahl des Verbrennungsmotors (1) des Hybridantriebs im Kolbenraum (13) ein Rotationshydraulikdruck herrscht, der die zwischen den Verbrennungsmotor (1) und die Elektromaschine (2) geschaltete Kupplung (5) nicht schließt.

3. Antriebsstrang nach Anspruch 1 oder 2, **dadurch gekennzeichnet, dass** bei ausgefallener Elektromaschine (2) des Hybridantriebs und bei geöffneter sowie elektrisch nicht angesteuerter Kupplung (5) die zwischen den Verbrennungsmotor (1) und die Elektromaschine (2) geschaltete Kupplung (5) nicht schließt, und zwar weder unterhalb der definierten Grenzdrehzahl des Verbrennungsmotors (1) noch mit Erreichen und Überschreiten der definierten Grenzdrehzahl des Verbrennungsmotors (1).

4. Antriebsstrang nach einem der Ansprüche 1 bis 3, **dadurch gekennzeichnet, dass** der Druckausgleichsraum (14) zur Unterstützung des Schließens der Kupplung (5) bei ausgefallener Elektromaschine (2) über mindestens ein Ventil entlüftbar ist.

5. Antriebsstrang nach einem der Ansprüche 1 bis 4, **dadurch gekennzeichnet, dass** der Druckausgleichsraum (14) zur Unterstützung des Öffnens der Kupplung (5) bei ausgefallener Elektromaschine (2) über mindestens ein Ventil befüllbar ist.
